# EUROPEAN PATENT APPLICATION

(11) **EP 4 621 725 A1**
(43) Date of publication of application: **24.09.2025**
(21) Application number: 25163679.1
(22) Date of filing: 13.03.2025
(51) Int. Cl.: G06V 10/20, G06V 10/30, G06V 10/44, G06V 10/54, G06V 10/764, G06V 10/774, G06V 10/82, G06V 20/69

(54) **DETECTION SYSTEM, DETECTION DEVICE, DETECTION METHOD, AND PROGRAM**

(30) Priority: 19.03.2024 JP 2024044063
(71) Applicant: Ricoh Company, Ltd., Tokyo 143-8555 (JP)
(72) Inventor: KUDO, Shunsuke, Tokyo, 143-8555 (JP)
(74) Representative: Marks & Clerk LLP

(57) **Abstract**

A detection system includes: a candidate generator; a pre-processor; and a detector. The candidate generator generates candidates for a detection target image, in which a detection target is captured, from a captured image for detection that includes an image of an object having the detection target and a noise image. The pre-processor that divides the captured image for detection into small regions and determines whether or not each small region image has features of subjects other than the object having the detection target based on an image feature amount of the small region image to obtain an exclusion region in the captured image based on a determination result. The detector detects the detection target image from among the candidates for the detection target image that are not included in the exclusion region by predetermined detection processing.

## Description

### BACKGROUND OF THE INVENTION

### Field of the Invention

The present invention relates to a detection system, a detection device, a detection method, and a program.

Priority is claimed on Japanese Patent Application No. 2024-044063, filed March 19, 2024, the content of which is incorporated herein by reference.

### Description of Related Art

A technology for detecting an image of a minute detection target in an image captured at a predetermined magnification (a captured image) is known. In addition, an image processing algorithm such as particle analysis is known.

However, it is difficult for the image processing algorithm such as the particle analysis to distinguish between the minute particulate detection target and noise in the captured image, for example. For this reason, both the minute detection target and a large amount of noise are extracted from the captured image, and thus the accuracy of the particle analysis may be reduced. In addition, depending on fluorescent staining, an experimental condition, or a detection target, image quality of the captured image may be reduced, and thus it is difficult to distinguish between the detection target and the noise in the captured image.

In the image processing algorithm for classifying cell types and tissues, classification is performed using an observation instrument at a magnification that allows an observer to classify cell types and the like, and a minute object in the captured image that contains a large amount of noise is not the detection target. In addition, the shape of a minute detection target is unclear in the captured image. For this reason, it may not be possible to distinguish between an image of the detection target and a noise image in the captured image simply by focusing on features of the shape of the detection target.

In addition, particularly in a case in which cells, tissues, and the like are spatially distributed, a difference in density may be present between regions. In a high-density region, the visibility of the minute shape of the detection target may be reduced by subjects other than the detection target, such as cells and tissues, and thus detection may be inhibited and detection performance may be unstable.

### SUMMARY OF THE INVENTION

An object of the present invention is to provide a detection system, a detection device, a detection method, and a program that can stabilize performance of detecting an image of a minute detection target in a captured image.

One aspect of the present invention is a detection system including: a candidate generator that generates candidates for a detection target image, in which a detection target is captured, from a captured image for detection that includes an image of an object having the detection target and a noise image; a pre-processor that divides the captured image for detection into small regions and determines whether or not each small region image has features of subjects other than the object having the detection target based on an image feature amount of the small region image to obtain an exclusion region in the captured image based on a determination result; and a detector that detects the detection target image from among the candidates for the detection target image that are not included in the exclusion region by predetermined detection processing.

### BRIEF DESCRIPTION OF THE DRAWINGS

FIG. 1 is a diagram showing an example of a configuration of a detection system in a first embodiment.
FIG. 2 is a diagram showing an example of first pre-processing for a captured image in the first embodiment.
FIG. 3 is a diagram showing an example of second pre-processing for the captured image in the first embodiment.
FIG. 4 is a diagram showing an example of pre-processing and detection processing for a captured image for detection in the first embodiment.
FIG. 5 is a flowchart showing an example of an operation of a detection device in the first embodiment.
FIG. 6 is a diagram showing an example of a configuration of a detection system in a second embodiment.
FIG. 7 is a diagram showing an example of an operation of a second pre-processing of a detection device in the second embodiment.
FIG. 8 is a diagram showing an example of a configuration of a detection system in a third embodiment.
FIG. 9 is a diagram showing an example of a captured image for training in the third embodiment.
FIG. 10 is a diagram showing an example of training data in the third embodiment.
FIG. 11 is a flowchart showing an example of an operation of a training device in a training stage in the third embodiment.

### DETAILED DESCRIPTION OF THE INVENTION

Embodiments of the present invention will be described in detail with reference to the drawings. It will be apparent to a person skilled in the art based on the content of the present disclosure that the following description of embodiments of the present invention is merely a specific description of the invention as defined in the appended claims and equivalents thereof, and is not intended to limit them.

### (First Embodiment)

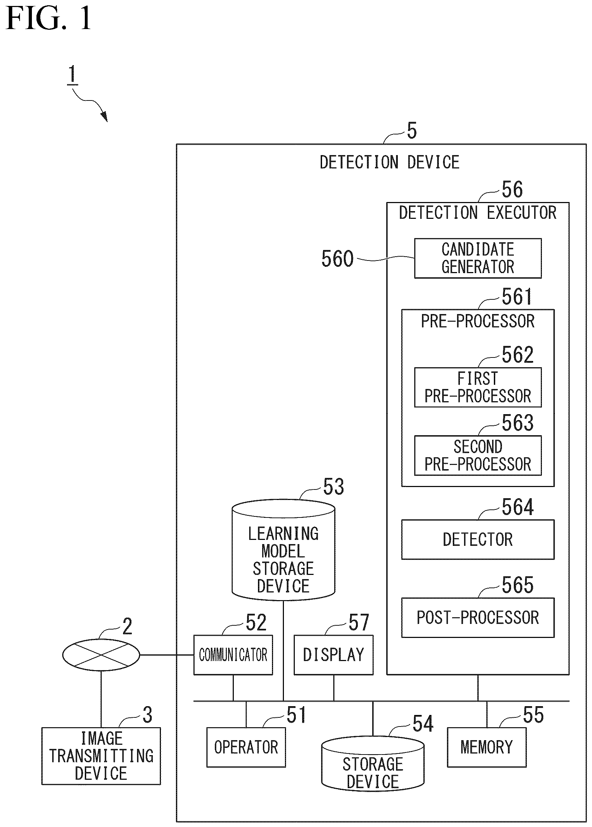

FIG. 1 is a diagram showing an example of a configuration of a detection system 1 in a first embodiment. The detection system 1 detects an image of a minute detection target in a captured image. The detection system 1 extracts candidates for the detection target image from the captured image using an image processing algorithm that focuses on a structure (a shape, a color) around the minute detection target. The detection system 1 extracts a region, in which detection of the minute detection target is inhibited, in the captured image. The detection system 1 extracts a region in which a density of subjects other than the detection target, such as cells and tissues, is high. The detection system 1 excludes the extracted region from a region in which the minute detection target is to be detected. The detection system 1 detects the detection target image from among the candidates for the detection target image extracted from a region other than the exclusion region in the captured image, by predetermined detection processing such as a machine learning model.

The captured image is, for example, an image of a biological sample captured at a predetermined magnification using an optical microscope. The captured image may be a color image or a monochrome image (for example, a gray image). The color image may be a red green blue (RGB) image, or an image in another color space (for example, a Lab color space).

The detection target includes, for example, organelles, cytoskeleton, and proteins. Examples of the organelles include lysosomes, autophagosomes, cytoplasmic tissues, vesicles, and mitochondria. The cytoskeleton includes growth cones, dendritic spines of a nerve cell, actin filaments, and microtubules. The proteins (protein aggregates) include synapsin, synaptophysin, vesicular glutamate transporter (vGLUT), vesicular GABA transporter (vGAT), postsynaptic density-95 (PSD-95), drebrin, Homer, cell nucleus, micronucleus, stress granules, prion, β-amyloid, and α-synuclein, which are accumulated in a synapse of a nerve cell.

The size of the minute detection target is, for example, about 0.01 µm³ to several µm³. The size of the minute detection target need only be minute (smaller than or equal to a predetermined threshold value) relative to the captured image, and is not limited to a specific size.

The detection system 1 includes a communication line 2, an image transmitting device 3, and a detection device 5. The communication line 2 may be a wired communication line or a wireless communication line. In addition, functional units of the devices in the detection system 1 may be distributed over a network such as the Internet using a cloud technology. In addition, the functional units of the devices in the detection system 1 may be performed by a single information processing device.

The image transmitting device 3 is, for example, a server device. The image transmitting device 3 stores a plurality of captured images in advance. The captured images include, for example, images of cells captured by an optical microscope, a fluorescent microscope, or the like. The image transmitting device 3 transmits a captured image for detection to the detection device 5 in response to a request from the detection device 5.

The detection device 5 detects the detection target image in the captured image for detection by predetermined detection processing using a machine learning model constructed in advance, or the like. The detection device 5 includes an operator 51, a communicator 52, a learning model storage device 53, a storage device 54, a memory 55, a detection executor 56, and a display 57. The storage device 54 may also serve as the learning model storage device 53.

The detection device 5 is realized as software by a processor such as a central processing unit (CPU) executing programs stored in the storage device 54 having a non-volatile recording medium (a non-transitory recording medium) and a memory 55. The programs may be recorded in a computer-readable recording medium. The detection device 5 may be realized by using hardware including an electronic circuit (or an electronic circuitry) that uses, for example, an large scale integrated circuit (LSI), an application specific integrated circuit (ASIC), a programmable logic device (PLD), a field programmable gate array (FPGA), or the like.

The operator 51 is an operation device such as a mouse, a keyboard, and a touch panel. The operator 51 receives an operation by the user. The operation by the user is an operation for inputting, for example, instructions regarding selection of the captured image for detecting the detection target image and selection of a machine learning model to use in a case in which a plurality of machine learning models are registered, and instructions as to whether or not to end inference execution, into the detection device 5.

The communicator 52 executes communication with other devices via the communication line 2. The communicator 52 transmits the request for the captured image for detection to the image transmitting device 3. The communicator 52 receives the captured image transmitted by the image transmitting device 3 in response to the request. The learning model storage device 53 stores one or a plurality of types of machine learning models. The storage device 54 stores in advance a computer program for inference processing using the machine learning model. The storage device 54 further stores the machine learning model acquired from the learning model storage device 53. The storage device 54 may store the coordinates of the candidates for the detection target image in the captured image. In the memory 55, a computer program for machine learning such as deep learning is deployed from the storage device 54. The memory 55 may include an auxiliary storage device such as a graphics processing unit (GPU).

The detection executor 56 uses the machine learning model to detect the detection target image in the captured image for detection acquired from the image transmitting device 3. Such a machine learning model uses, for example, image features obtained from pixel values of the candidates for the detection target image as input. The detection executor 56 includes a candidate generator 560, a pre-processor 561, a detector 564, and a post-processor 565.

The candidate generator 560 acquires the captured image for detection received by the communicator 52 from the image transmitting device 3. The candidate generator 560 generates the candidates for the detection target image that is a target of detection processing using the machine learning model, from the acquired captured image for detection. The captured image includes, for example, an image of an object (for example, a cell) having the detection target (for example, the drebrin) and a noise image. Each of the candidates for the detection target image is an image having a predetermined shape and size, which is cut out from the captured image for detection so as to include a portion of the candidate for the detection target. The portion of the candidate for the detection target is each of particulate (spherical, convex) images distributed in the captured image, or an image having a predetermined shape and size, which includes the particulate images distributed in the captured image. In addition, the shape of the candidate for the detection target image is, for example, a rectangle. The size of the candidate for the detection target image may be any size as long as it is smaller than the size of the captured image (it is minute compared to the captured image) and is larger than or equal to the size of the detection target image.

Before the detection processing of detecting the detection target image from the candidates for the detection target image using the machine learning model, the pre-processor 561 performs first pre-processing and second pre-processing, which will be described below, in order to narrow down the candidates for the detection target image to be subjected to the detection processing. The pre-processor 561 has a first pre-processor 562 and a second pre-processor 563.

The first pre-processor 562 performs the first pre-processing of narrowing down the candidates for the detection target image based on an image feature amount (for example, brightness) based on the structure around the detection target. That is, the first pre-processor 562 obtains either or both of an extraction region and an exclusion region in the captured image for detection based on the image feature amount based on the structure around the detection target. The extraction region is a region in which an image of the structure around the detection target is likely to be included. The exclusion region is a region in which the structure around the detection target is likely to be included. The first pre-processor 562 extracts candidates obtained from the extraction region from among the candidates for the detection target image generated by the candidate generator 560 as the candidates for the detection target image to be used in the detection processing. **In** addition, the first pre-processor 562 excludes candidates obtained from the exclusion region from among the candidates for the detection target image extracted by the candidate generator 560 from the candidates for the detection target image to be used in the detection processing.

The first pre-processor 562 may determine the extraction region or the exclusion region from the captured image by executing a Hough transform on the captured image. In addition, the first pre-processor 562 may determine the extraction region or the exclusion region from the captured image based on a convex curvature (a shape index value) of the images distributed in the captured image. The first pre-processor 562 may determine the extraction region or the exclusion region from the captured image based on a blob filter using a Hessian, a histogram of oriented gradients using a first-order difference, or a difference of Gaussian filter using a Gaussian.

For example, in a case in which a minute structure that is present around the synapse is the detection target, the first pre-processor 562 extracts only the image around a dendrite from among the candidates for the detection target image generated by the candidate generator 560 by setting only the image around the dendrite as the extraction region. In a case in which fluorescent staining of a cell body including the dendrite is different from fluorescent staining of the synapse, the first pre-processor 562 may execute peak detection in the convex cell body by executing distance transform processing on the captured image. In addition, the first pre-processor 562 may specify coordinates near the cell nucleus by performing the fluorescent staining of the cell nucleus. The first pre-processor 562 may apply a circular mask to a region including a position of a peak based on the distance information from the position of the peak. That is, the first pre-processor 562 excludes candidates obtained from the exclusion region represented as the circular mask from among the candidates for the detection target image generated by the candidate generator 560. In this manner, the first pre-processor 562 may use the circular mask in the captured image to remove a cell body image including a cell nucleus image from among the candidates for the detection target image generated by the candidate generator 560.

In addition, after the first pre-processor 562 has determined the extraction region or the exclusion region, the candidate generator 560 may generate the candidates for the detection target image from the extraction region in the captured image for detection, or from a region in which the exclusion region is removed in the captured image for detection.

The second pre-processor 563 removes a region in which a structure similar to the detection target appears or a region in which a structure of the detection target is difficult to be recognized, in the captured image for detection, as a region unsuitable for detection of the detection target image. As a result, the second pre-processor 563 performs a second pre-processing to narrow down the candidates for the detection target image. The region in which the structure of the detection target is difficult to be recognized is, for example, a region in which the density of the subjects other than the detection target, such as cells or tissues, is high. A specific example of such a region is a region in which the dendrites overlap each other.

The detector 564 executes the detection processing on the captured image for detection using the machine learning model. The detector 564 inputs each of the candidates for the detection target image which are narrowed down by the first pre-processor 562 and the second pre-processor 563 into the machine learning model. The detector 564 may input each candidate for the detection target image into the machine learning model in batch processing. The detector 564 inputs the candidates for the detection target image into the machine learning model to obtain an output (a probability distribution (a probability map), a probability score) of the machine learning model. As a result, the detector 564 determines whether or not each of the input candidates for the detection target image is the detection target image based on the output of the machine learning model.

The detector 564 may derive statistics regarding the size of the candidate for the detection target image and statistics regarding information on the surrounding of the candidate for the detection target image, in the captured image. The detector 564 may determine whether or not the candidate for the detection target image is the detection target image by using a support vector machine for the pre-processed captured image based on the statistics. The detector 564 may determine whether or not the candidate for the detection target image is the detection target image based on the result of a clustering method based on statistics (for example, K-means).

The post-processor 565 executes predetermined post-processing based on the detection result by the detector 564. The post-processor 565 may generate a captured image in which the position of the detection target is emphasized by at least one of marking and coloring as the predetermined post-processing. The post-processor 565 may generate an image representing predetermined indices as the predetermined post-processing. In addition, the post-processor 565 may count the number of detection target images detected by the detector 564 as one of the indices. The post-processor 565 may derive the maturity of the cells as one of the indices based on the number of detection target images detected by the detector 564.

The display 57 is a display device such as a liquid crystal display. The display 57 displays the image generated by the post-processor 565.

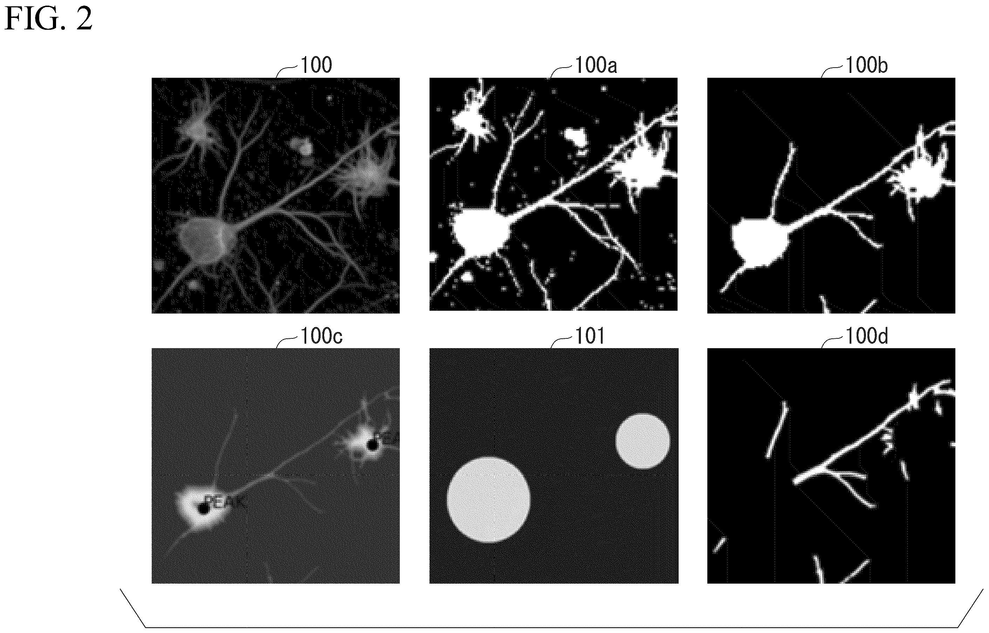

Next, the first pre-processing executed by the first pre-processor 562 of the detection device 5 will be described. FIG. 2 is a diagram showing an example of the first pre-processing for the captured image in the first embodiment. A captured image 100 is a captured image for detection (an original image). In this example, the image portion of the original image showing microtubule-associated protein 2 (MAP2) is used as the captured image 100. The captured image 100 includes an image of a plurality of cells stained using one or more dyes or an immunostaining method. The shape of each cell body is similar to a particulate shape (a spherical shape, a convex shape). The imaging magnification (the angle of view) of the captured image 100 is, for example, the imaging magnification of an optical microscope, and is arbitrary.

The first pre-processor 562 executes binarization processing on the captured image 100 (a gray image) acquired from the image transmitting device 3. As a result, the first pre-processor 562 generates a captured image 100a. In a case in which the captured image acquired from the image transmitting device 3 is a color image, the first pre-processor 562 takes out a specific channel from the acquired captured image, or combines a plurality of channels with each other in the acquired image. As a result, the first pre-processor 562 converts the color image into the captured image 100 of a one-channel gray image, and then executes binarization processing. The first pre-processor 562 executes dust removal processing on the captured image 100a. As a result, the first pre-processor 562 generates a captured image 100b.

The first pre-processor 562 executes distance transform processing and peak detection processing on the captured image 100b. As a result, the first pre-processor 562 generates a captured image 100c. The shape of each cell is similar to a particulate shape (a spherical shape, a convex shape). For this reason, the position of each of peaks detected by the peak detection processing is a position near the center (near the cell nucleus) of each cell body image in the captured image 100c. The first pre-processor 562 generates a mask image 101 based on the positions of the detected peaks and the result of the distance transform processing. The mask image 101 includes a circular mask image centered near the center of each cell body image. The size of the circular mask image is determined according to the result of the distance transformation processing.

The first pre-processor 562 executes mask processing using the mask image 101 on the captured image 100b. As a result, the first pre-processor 562 generates a captured image 100d. In the captured image 100d, the images of the cell bodies are removed by the mask processing, and linear images such as an axon image and a dendrite image having a synapse image remain. The drebrin that is an example of the detection target is accumulated in the synapses of nerve cells. Therefore, for example, an amorphous image that is not located near the synapse image in the captured image 100 is highly likely to be a noise image. In this way, the first pre-processor 562 obtains an image (distribution) of the synapses, which are structures around the drebrin, in the captured image 100d. As a result, it is easy to distinguish between the drebrin image and the noise image in the captured image 100 (the original image). The first pre-processor 562 narrows down the extraction region from which the candidates for the detection target image are obtained from the captured image 100 to the region around the linear image in the captured image 100d. That is, the first pre-processor 562 extracts the candidates obtained from the region around the linear image in the captured image 100d from among the candidates for the detection target image generated by the candidate generator 560, as targets for which the detection processing is to be performed.

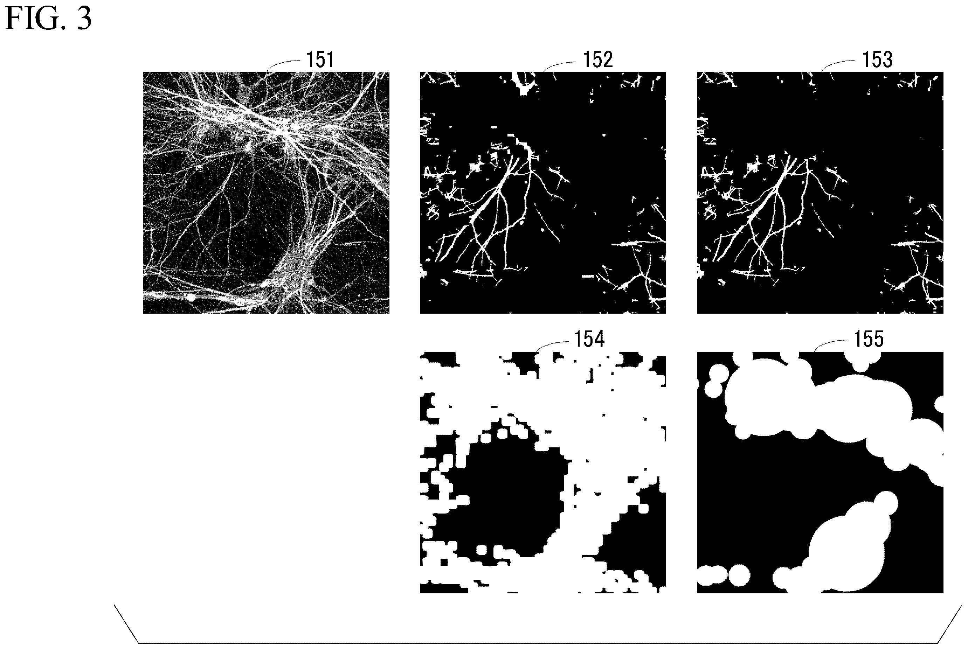

Next, the second pre-processing executed by the second pre-processor 563 of the detection device 5 will be described. FIG. 3 is a diagram showing an example of the second pre-processing for the captured image in the first embodiment. The second pre-processor 563 evaluates the degree of an inhibition factor to the detection of the detection target image for each small region of the captured image to obtain an evaluation value. In a case in which the evaluation value satisfies a predetermined criterion, the second pre-processor 563 sets the region as an exclusion region to be excluded from the detection target. Examples of the inhibition factor include subjects other than the detection target, such as cells and tissues, and in particular those that have similar shapes or brightness values to the detection target. If there are subjects that have similar shapes or brightness values to the detection target, this can lead to missed detection or erroneous detection of the detection target. There is a risk of an error in the number of detection target images counted by the post-processor 565, for example.

An example of evaluating the degree of the inhibition factor is a method of dividing a captured image 151 (the gray image) in which the inhibition factor appears into small regions and obtaining the statistics of the brightness values of each small region as an evaluation value. It is desirable to set the size of the small region to be equal to or larger than the size of the candidate for the detection target image. The shape of the small regions is not limited to rectangular, and may be another shape such as a circular shape. Examples of the statistics include the average value, the median value, and the most frequent value of the brightness values obtained from pixel values of pixels included in the small region.

Another example of evaluating the degree of the inhibition factor is a method in which the inhibition factors such as cells and tissues are detected from the captured image 151 (the gray image), and for each small region, the number of detected inhibition factors contained in the small region or the area of the detected inhibition factors occupying in the small region is calculated as an evaluation value.

An example of the predetermined criterion is a method in which, in a case in which the evaluation value for each small region satisfies a predetermined condition, the region is determined to be unsuitable for detecting the detection target image. An example of the predetermined condition is a method in which, in a case in which the average value of the brightness values of the pixels included in the small region exceeds a threshold value, the small region is determined to be an exclusion region in which the detection is invalid. The threshold value may be a predetermined one, or may be dynamically determined. As an example of dynamically determining the threshold value, a method in which the threshold value is obtained by discriminant analysis from a histogram of the median brightness values obtained for each small region in the entire captured image, and then the small region that exceeds the threshold value is invalidated (to be the exclusion region), or the like is considered. In addition, the threshold value may be determined according to the image quality, the intensity of the fluorescent light, or the like, or may be a threshold value input by the operator 51.

The second pre-processor 563 generates a mask image 154 for masking the small region determined to be the exclusion region based on the above criteria. The second pre-processor 563 may create the small regions adjacent to each other without overlapping, or may create the small regions with overlapping in at least one of a horizontal direction and a vertical direction. In a case in which the small regions are created with overlapping, it is desirable that the regions to be masked in the mask image also overlap each other.

The second pre-processing is used in combination with the first pre-processing described in FIG. 2, but the first pre-processing may not be performed. In this case, the small regions obtained from the region in which the exclusion region is removed in the second pre-processing may be used as the candidates for the detection target image. In a case in which the second pre-processing is used in combination with the first pre-processing, the second pre-processor 563 synthesizes a mask image by taking the logical sum of the mask image 154 created by the second pre-processing and a mask image 155 created by the first pre-processing. The second pre-processor 563 masks a binarized image of the captured image 151 using the synthesized mask image. An example in which this masking processing is performed will be described below.

A captured image 152 is a result of masking the binarized image of the captured image 151 using the mask image 154 created by the second pre-processing. As a result of this processing, in the captured image 152, the upper part and the lower right part in which dendrites are dense are excluded. A captured image 153 is a result of further masking the captured image 152 using the mask image 155 created by the first pre-processing. This corresponds to masking using the synthesized mask image. By this processing, in the captured image 153, the upper part in which the cell bodies are present is further excluded.

The second pre-processor 563 excludes candidates for the detection target image obtained from the same region in the captured image for detection as the small region determined as the exclusion region from among the candidates for the captured image extracted by performing the first pre-processing by the first pre-processor 562. As a result, the second pre-processor 563 narrows down the candidates for the detection target image which is a determination target. In addition, in a case in which the shape and size of the candidate for the detection target image generated by the candidate generator 560 from the captured image are the same as those of the small region used by the second pre-processor 563 in the second pre-processing, the candidate for the detection target image generated by the candidate generator 560 can be used as the image of the small region in the second pre-processing performed by the second pre-processor 563.

As a result, the pre-processor 561 excludes the region, in which subjects having similar shapes or brightness values to the detection target are present, from the captured image 151, thereby suppressing missed detection or erroneous detection of the detection target. As a result, it is possible to reduce a risk of an error in the number of detection target images counted by the post-processor 565, for example.

Next, the pre-processing, the detection processing (the inference processing), and the post-processing in the detection device 5 will be described.

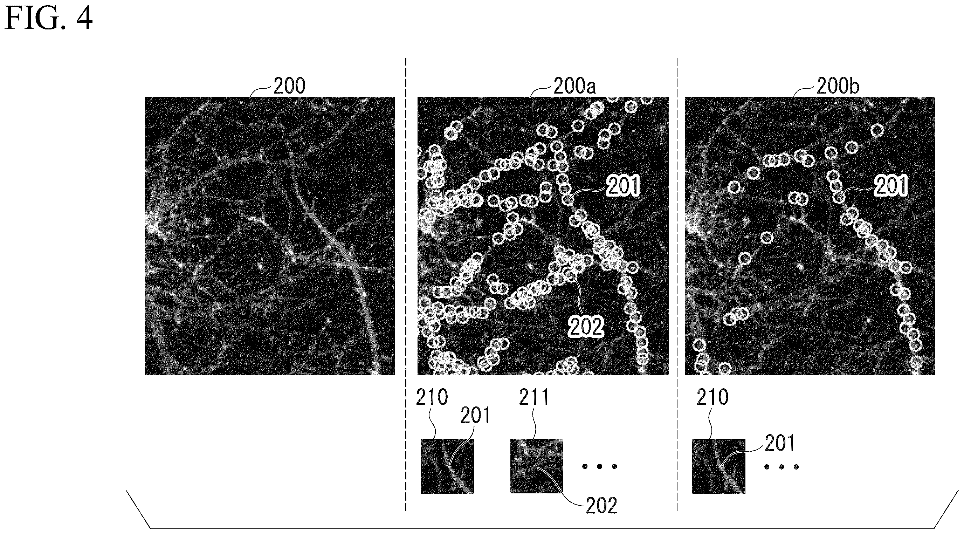

FIG. 4 is a diagram showing an example of the pre-processing and detection processing for the captured image for detection in the first embodiment. A captured image 200 is a captured image for detection (an original image). In a pre-processing stage, the candidate generator 560 generates candidates for a detection target image from the captured image 200 acquired from the image transmitting device 3. The pre-processor 561 executes first pre-processing and second pre-processing on the candidates for the detection target image generated by the candidate generator 560 to narrow down the candidates. As a result, the pre-processor 561 generates the candidates for the detection target image (a drebrin image) in a captured image 200a. The pre-processor 561 associates the candidates for the detection target image in the captured image 200a with coordinates in the captured image 200a.

In the captured image 200a illustrated in FIG. 4, a plurality of circles are drawn for the purpose of conveniently indicating the positions of images of the candidates for the detection target (the drebrin) in the synapses of nerve cells. The position of each circle indicates the position of the image of each of the candidates for the detection target. In the captured image 200a, from the viewpoint of ensuring the ease of viewing, only a detection target image 201, which is a representative of images of the candidates for the detection target, and a noise image 202 are designated by reference signs.

The candidate 210 for the detection target image is one of the candidates for the detection target image input to a machine learning model in an inference stage. Here, the machine learning model receives the candidates for the detection target image and outputs a "drebrin class" (a detection target class) or a "noise class" (a background class). The candidate 210 for the detection target image includes the detection target image 201 (a particulate image). The candidate 211 for the detection target image is the other of the candidates for the detection target image input to the machine learning model in the inference stage. The candidate 211 of the detection target image includes a noise image 202 (an amorphous image). In this way, at a stage where the detection processing using the machine learning model is not executed by the detector 564 (in the inference stage, before the detection processing is executed) after the first pre-processing and the second pre-processing are executed by the pre-processor 561, the candidates for the detection target image may include the noise image 202.

The detector 564 executes the detection processing (the inference processing) on the captured image 200a using the machine learning model. Here, the detector 564 inputs each candidate for the detection target image into the machine learning model. In FIG. 4, the detector 564 inputs the candidate 210 into the machine learning model to obtain the output "drebrin class" of the machine learning model (the trained model). As a result, the detector 564 determines that the detection target image 201 of the candidate 210 is a detection target image (a drebrin image). In addition, the detector 564 inputs the candidate 211 into the machine learning model to obtain the output "noise class" of the machine learning model (the trained model). As a result, the detector 564 determines that the noise image 202 of the candidate 211 is not a detection target image. That is, the detector 564 determines that the noise image 202 of the candidate 211 is a noise image.

The post-processor 565 executes predetermined post-processing for each candidate determined to be a detection target image. For example, the post-processor 565 generates a captured image 200b by drawing a circle at a position of each of the detection target images 201 in the captured image 200. The post-processor 565 may count the number of detection target images 201 in the captured image 200b as one of the indices. The post-processor 565 may derive the maturity of the cells as one of the indices based on the number of detection target images 201 (drebrin images) in the captured image 200.

The second pre-processing by the second pre-processor 563 may be performed after detection by the detector 564. That is, the detector 564 inputs the candidate for each detection target obtained by performing the first pre-processing by the first pre-processor 562 into the machine learning model to obtain a determination result of the "drebrin class" or the "noise class." The second pre-processor 563 performs the second pre-processing on the candidate for each detection target determined to be the "drebrin class," excludes the candidates obtained from a region of the captured image 200a determined to be an exclusion region from the "drebrin class," and obtains the remaining candidates for the "drebrin class" as the detection target images.

Next, an example of an operation of the detection system 1 will be described.

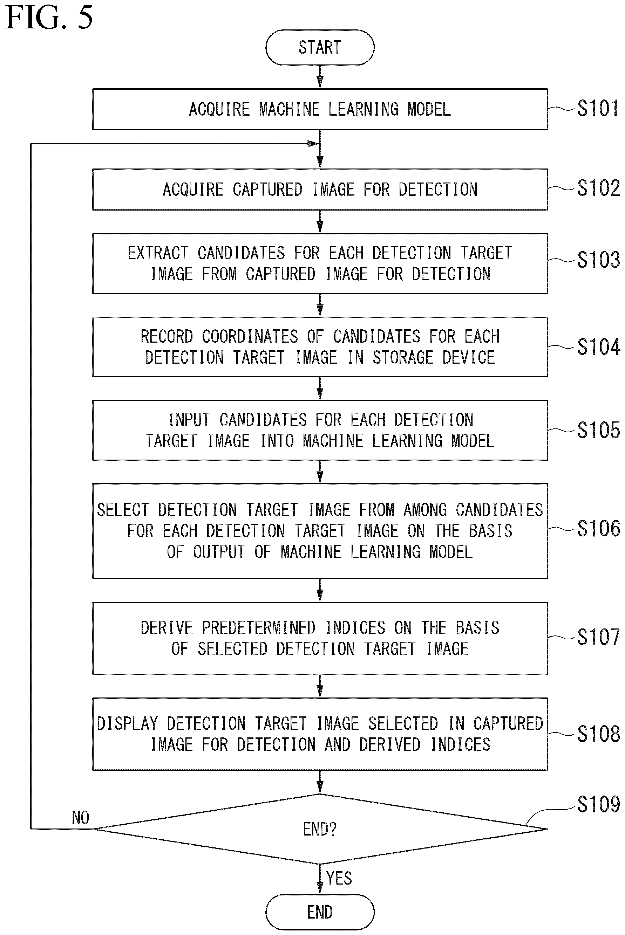

FIG. 5 is a flowchart showing an example of an operation of the detection system 1 in the inference stage device in the first embodiment. The detector 564 of the detection device 5 acquires the machine learning model (the trained model) from the learning model storage device 53 (step S101). The candidate generator 560 acquires the captured image 200 for detection from the image transmitting device 3 (step S102). The candidate generatore 560 generates the candidates for the detection target image from the captured image 200. The pre-processor 561 extracts the candidates 210 and 211 for the detection target image, and the like from among the candidates for the detection target image generated by the candidate generator 560 based on the structure around the detection target (the distribution of the synapses) and the degree of inhibition factor to the detection of the detection target image for each small region (step S103). The pre-processor 561 records the coordinates of the candidates 210 and 211 for each detection target image in the storage device 54 (step S104).

Here, the detector 564 inputs the candidates for each detection target image into the machine learning model (step S105). The detector 564 selects the candidate 210 including the detection target image 201, and the like as an image including the detection target image 201 from among the candidates 210 and 211 for each detection target image, and the like based on the output "drebrin class" of the machine learning model (step S106).

The post-processor 565 derives the predetermined indices (for example, the maturity of the cells) based on the detection target image 201 and the like included in the image selected in step S106. For example, the post-processor 565 counts the detection target structures and the proteins (the drebrins in this example) accumulated in the synapses based on the number of detection target images 201. The post-processor 565 uses the information on the dendrites to derive the unit length of the dendrite and the density per unit area of the dendrites. The post-processor 565 derives the maturity of the cells based on the density per unit area (step S107). The post-processor 565 causes the display 57 to display the captured image 200 for detection, the detection target image 201 and the like included in the candidate 210 selected in the captured image 200 for detection, and the derived indices (step S108).

The detector 564 determines whether or not to end the detection processing based on, for example, an operation received by the operator 41. In a case in which the detection processing is to be continued (step S109: NO), the detector 564 returns the processing to step S102. In a case in which the detection processing is to be ended (step S109: YES), the detector 564 ends the detection processing of FIG. 5.

As described above, the detection system 1 includes the detection device 5. The detection device 5 includes the candidate generator 560, the pre-processor 561, and the detector 564. The detector 564 acquires the machine learning model from the learning model storage device 53. The candidate generator 560 acquires the candidates for the detection target image, in which the detection target is captured, from the captured image 200 for detection that includes an image of an object having the detection target and a noise image. The pre-processor 561 extracts the candidates 210 and 211 for the detection target image in the captured image 200a from among these candidates based on the structure around the detection target (for example, the distribution of the synapses) and the degree of the inhibition factor to the detection target in the captured image 200. The detector 564 detects, for example, the detection target image 201 of the candidate 210 from among the candidates 210 and 211 for the detection target image, and the like, using the machine learning model.

As a result, it is possible to improve the performance of detecting the image of the minute detection target in the captured image.

### (Second Embodiment)

A second embodiment illustrates an example of learning in a case in which the second pre-processing in the first embodiment is performed by machine learning. That is, in the second embodiment, the degree of inhibition factors such as cells and tissues is determined by the machine learning. The second embodiment will be described focusing on the differences from the first embodiment. A processing flow diagram in an inference stage of the second embodiment is common to the first embodiment, and therefore will not be described.

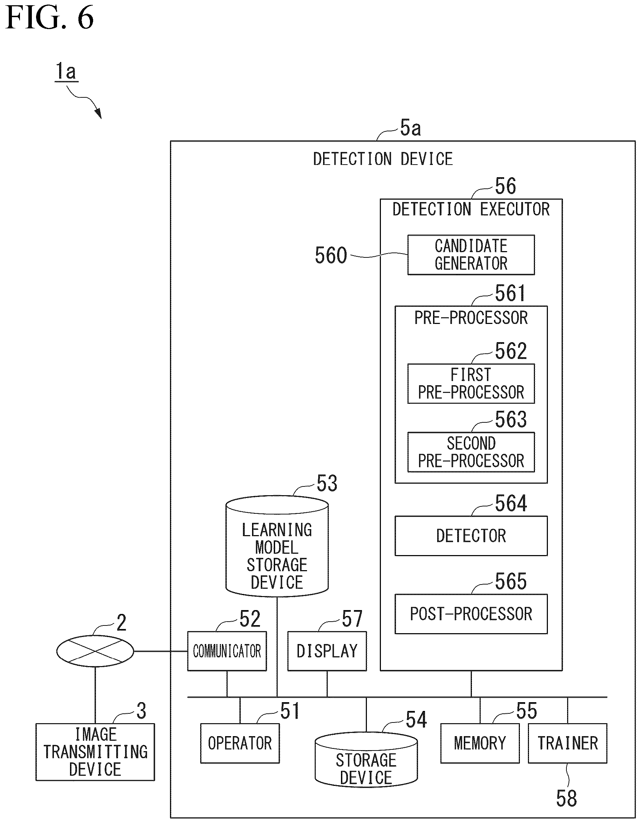

FIG. 6 is a diagram showing an example of a configuration of a detection system 1a according to a second embodiment. In FIG. 6, the same components as those in the detection system 1 according to the first embodiment shown in FIG. 1 are designated by the same reference signs, and the description thereof will be omitted. A detection system 1a shown in FIG. 6 differs from the detection system 1 shown in FIG. 1 in that a detection device 5a is provided instead of the detection device 5. The detection device 5a differs from the detection device 5 shown in FIG. 1 in that a trainer 58 is further provided. In addition, a learning model storage device 53 stores a trained pre-processing model, which is a trained machine learning model that performs the second pre-processing.

The flow of the trainer 58 that trains the trained pre-processing model used to determine the exclusion region in the second pre-processing will be described. Training images including subjects other than the detection target, such as cells or tissues that correspond to the exclusion region, and correct labels indicating whether or not the images correspond to the exclusion region are associated with each other and are stored in advance in the storage device 54 as training data.

In a training stage of the trained pre-processing model, the trainer 58 executes training of the machine learning model based on the training images. The machine learning model includes, for example, a neural network such as a convolutional neural network (CNN). The convolutional neural network has a convolutional layer and a fully connected layer. In addition to the neural network, any machine learning model that performs supervised learning for classification, such as a support vector machine or a random forest, may be used. The machine learning model may be of one type or of a plurality of types. In addition, the machine learning model in the second embodiment may be generated by fine-tuning a pre-trained machine learning model using the training data.

The trainer 58 uses the training images and the correct labels stored in the storage device 54 to execute training of the machine learning model. The trainer 58 adjusts the parameters of the machine learning model to reduce a difference between the output of the machine learning model and the correct label, for example, by using an error back propagation method on the output (the probability distribution (the probability map), the probability score) of the machine learning model. Here, one type of detection target is associated with each probability distribution. In a case in which a plurality of machine learning models are used, the probability distributions for each detection target may be integrated (added). The trainer 58 writes the trained machine learning model into the learning model storage device 53 as a trained pre-processing model.

The detection system 1a may have a configuration including a training device having the trainer 58 and the detection device 5 of the first embodiment, instead of the detection device 5a.

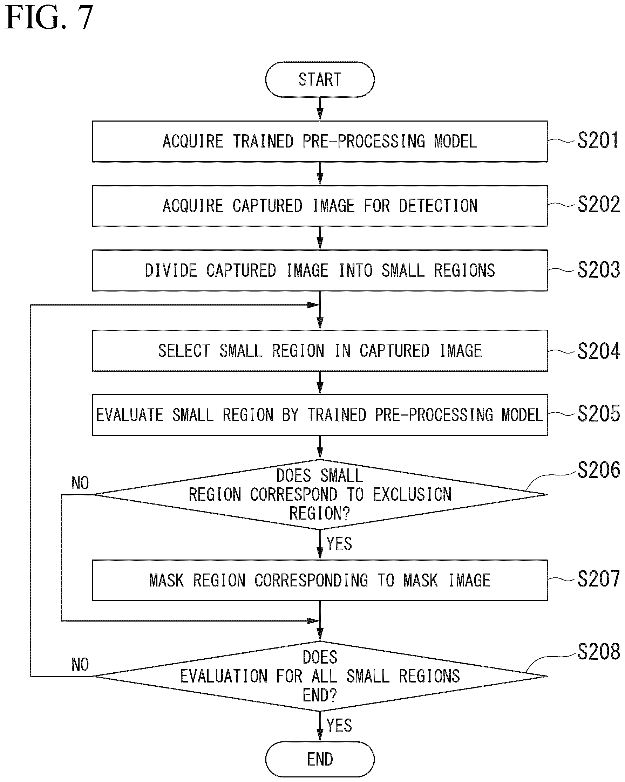

FIG. 7 is a processing flow diagram in which the detection device 5a uses the trained pre-processing model that has learned in advance the characteristics of the exclusion region when setting the exclusion region in the second pre-processing.

The second pre-processor 563 acquires the trained pre-processing model to be used for determining the exclusion region from the learning model storage device 53 (step S201). Next, the second pre-processor 563 acquires the captured image 100 acquired by the pre-processor 561 in step S102 of FIG. 5 (step S202), and divides the captured image 100 into small regions of a size suitable for input to the trained pre-processing model (step S203). The second pre-processor 563 selects an unselected small region from among the divided small regions (step S204).

Next, the second pre-processor 563 inputs the selected small region into the trained pre-processing model, evaluates the small region, and determines whether the small region corresponds to the exclusion region (step S205). In a case in which the second pre-processor 563 determines that the small region is the exclusion region (YES in step S206), the second pre-processor 563 masks the region corresponding to a mask image such that the region is not used to detect the detection target image in subsequent processing (step S207). On the other hand, in a case in which the second pre-processor 563 does not determine that the small region is an exclusion target region (NO in step S206), the second pre-processor 563 skips step S207 and proceeds to the next step S208.

The second pre-processor 563 repeats steps S204 to S207 for the entire captured image (step S208). That is, in a case in which there is any unselected small region (NO in step S208), the second pre-processor 563 repeats the processing from step S204, and in a case in which all the small regions have been selected (YES in step S208), the second pre-processor 563 ends the processing of FIG. 7. The second pre-processor 563 excludes the candidates 210 and 211 obtained from a region in the captured image 200a for detection corresponding to the mask region in the mask image generated in the processing of FIG. 7 from among the candidates 210 and 211 for the detection target image extracted by the first pre-processor 562. The detection device 5a performs the subsequent processing from step S104 in FIG. 5 using the remaining candidates 210 and 211 for the detection target image which have not been excluded.

The second pre-processor 563 may create the small regions adjacent to each other without overlapping, or may create the small regions with overlapping in at least one of a horizontal direction and a vertical direction. When repeating step S207, the second pre-processor 563 may extract and omit in advance a region in which it is clear that no detection target image is present, such as a background region in which nothing is captured.

By using the machine learning model to determine whether or not the small region is the exclusion region, it is expected that the determination can be made with greater accuracy than a rule-based method.

### (Third Embodiment)

A third embodiment includes a training device that trains the machine learning model used by the detection device 5 of the first embodiment or the detection device 5a of the second embodiment to determine the detection target image. The third embodiment will be described focusing on the differences from the first embodiment, but the differences between the third embodiment and the first embodiment may be applied to the detection system of the second embodiment.

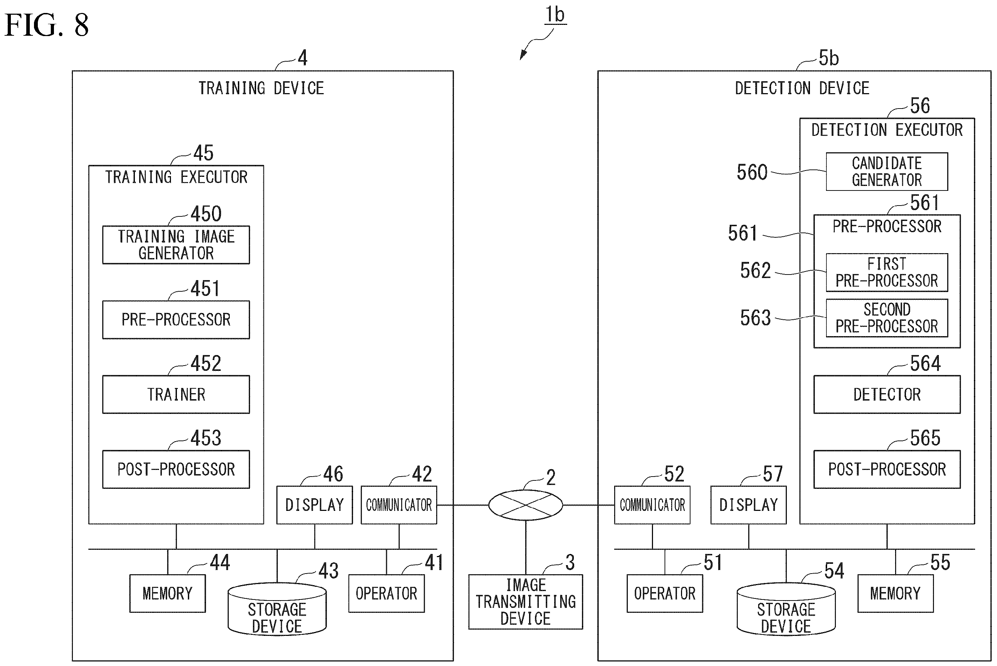

FIG. 8 is a diagram showing an example of a configuration of a detection system 1b in the third embodiment. In FIG. 8, the same components as those in the detection system 1 according to the first embodiment shown in FIG. 1 are designated by the same reference signs, and the description thereof will be omitted. A detection system 1b shown in FIG. 8 differs from the detection system 1 shown in FIG. 1 in that a training device 4 is further provided, and that a detection device 5b is provided instead of the detection device 5. The detection device 5b differs from the detection device 5 shown in FIG. 1 in that the detection device 5b does not have the learning model storage device 53.

The training device 4 and the detection device 5b may be integrated with each other or separate from each other. That is, a single information processing device may function as the training device 4 or as the detection device 5b depending on a computer program installed in the single information processing device. In addition, functional units of the devices in the detection system 1b may be distributed over a network such as the Internet using a cloud technology.

In a training stage (a training phase), the training device 4 executes training of the machine learning model used by the detector 564 based on the training images. The machine learning model includes, for example, a neural network such as a convolutional neural network (CNN). The convolutional neural network has a convolutional layer and a fully connected layer. The machine learning model may be of one type or of a plurality of types. In addition, the machine learning model in the third embodiment may be generated by fine-tuning a pre-trained machine learning model using the training data.

The training device 4 includes an operator 41, a communicator 42, a storage device 43, a memory 44, a training executor 45, and a display 46.

The training device 4 is realized as software by a processor such as a CPU executing programs stored in the storage device 43 having a non-volatile recording medium (a non-transitory recording medium) and a memory 44. The programs may be recorded in a computer-readable recording medium. The computer-readable recording medium is a non-transitory recording medium, such as a portable medium such as a flexible disk, an optical magnetic disk, a ROM, or a CD-ROM, or a storage device such as a hard disk or a solid-state drive (SSD) built into a computer system. The training device 4 may be realized using hardware including electronic circuits using, for example, an LSI, an ASIC, a PLD, or an FPGA.

The operator 41 is an operation device such as a mouse, a keyboard, and a touch panel. The operator 41 receives an operation by the user. The operation by the user is, for example, an operation of inputting instructions as to whether or not to end the execution of training into the training device 4. The operation by the user may be, for example, an operation of inputting the correct labels of the training data used in the machine learning into the training device 4. As a result, the machine learning corresponding to variations in the input training data is executed, and thus it is possible to generate a machine learning model that matches the sensibility of the user.

The communicator 42 executes communication with an image transmitting device 3. In addition, the communicator 42 executes communication with a communicator 52. The storage device 43 stores in advance a computer program for training processing using the machine learning model and the training data. The training data is a combination of the training images (explanatory variables) and the correct labels (objective variables). In the memory 44, a computer program for machine learning such as deep learning is deployed from the storage device 43. The memory 44 may include an auxiliary storage device such as a graphic processing unit (GPU).

The training executor 45 uses the training images and the correct labels to execute training of the machine learning model. The training executor 45 adjusts the parameters of the machine learning model, for example, by using an error back propagation method on the output (the probability distribution (the probability map), the probability score) of the machine learning model. Here, one type of detection target is associated with each probability distribution. In a case in which a plurality of machine learning models are used, the probability distributions for each detection target may be integrated (added).

The training executor 45 includes a training image generator 450, a pre-processor 451, a trainer 452, and a post-processor 453. The training image generator 450 performs the processing similar to that performed by the candidate generator 560 on the captured image for training which is acquired from the image transmitting device 3 to generate the training images. For example, the training image generator 450 sets particulate (spherical, convex) images distributed in the captured image as candidates for the detection target. The training image generator 450 sets images of the candidates for the detection target, or images each having a predetermined shape and size, which are cut out so as to include portions of the candidates for the detection target, as the training images.

The pre-processor 451 executes the first pre-processing similar to that executed by the first pre-processor 562 on the training images acquired by the training image generator 450. That is, the pre-processor 451 obtains an extraction region or an exclusion region in the captured image for training based on the image feature amount based on the structure around the detection target. The pre-processor 451 extracts images obtained from the extraction region, from among the training images generated by the training image generator 450, as the training images to be used in the training processing. Alternatively, the pre-processor 451 excludes images obtained from the exclusion region, from among the training images generated by the training image generator 450, from the training images to be used in the training processing. As a result, the pre-processor 451 extracts the training images including an image of the detection target (for example, drebrin) based on an image feature amount (for example, brightness) based on the structure around the detection target.

For example, the pre-processor 451 may execute a Hough transform on the captured image, and extract the extraction region including the image of the detection target, or the exclusion region which is unlikely to include the image of the detection target from the captured image based on the convex curvature of the images distributed in the captured image and based on a blob filter using a Hessian, an oriented gradient histogram using a first-order difference, or a Gaussian difference filter using a Gaussian.

In such an extraction algorithm using the pixel values, false positive (FP) occurs in the determination results of the candidate depending on the sensitivity to the pixel values. In a case in which the captured image includes few noise images, if it does not matter that the effort of the user in assigning the correct labels to the training images is increased, a segmentation network may be used for the captured image.

In a case in which many false positives occur in the determination results of the candidate, in order to increase the specificity of the detection target in the determination of the candidate, the pre-processor 451 may extract the training image including an image of the detection target from the captured image based on the biological structure of the detection target. For example, in a case in which a minute structure that is present around the synapse is the detection target, the pre-processor 451 may set only an image around the dendrite as the candidate for the detection target image.

In a case in which fluorescent staining of a cell body including the dendrite is different from fluorescent staining of the synapse, the pre-processor 451 may execute peak detection in the convex cell body by executing distance transform processing on the captured image. In addition, the pre-processor 451 may specify coordinates near the cell nucleus by performing the fluorescent staining of the cell nucleus. The pre-processor 451 may apply a circular mask (an exclusion region) to a region including a position of a peak based on the distance information from the position of the peak. That is, the pre-processor 451 may use the circular mask in the captured image to remove a cell body images including a cell nucleus image from among the training images generated by the training image generator 450.

The pre-processor 451 creates the training data by assigning the correct label to the candidate for the detection target image of each of the training images based on the operation of the user. The pre-processor 451 may display the image in which the candidates for the detection target image are emphasized on the display 46 at a single magnification or multiple magnifications. As a result, it is not necessary for the user to perform a complex annotation method that uses the segmentation network. The user does not have to forcefully assign a correct label to a candidate for which it is difficult for the user to determine whether or not it is a detection target image. The user may assign a correct label to such a candidate for the detection target image, the correct label indicating that the image will not be used in the machine learning.

The trainer 452 executes training of the machine learning model based on the training image. The trainer 452 inputs each training image into the machine learning model. The input may be executed in batch processing. The trainer 452 adjusts the parameters of the machine learning model to reduce an error between the output (the class) of the machine learning model and the correct label for each training image.

The post-processor 453 executes predetermined post-processing based on the training result by the trainer 452. The post-processor 453 may generate a captured image in which the position of the detection target is emphasized by at least one of marking and coloring as the predetermined post-processing. The post-processor 453 may generate an image representing predetermined indices as the predetermined post-processing.

The display 46 is a display device such as a liquid crystal display. The display 46 displays the image generated by the post-processor 453.

Next, the training processing and the post-processing in the training device 4 will be described.

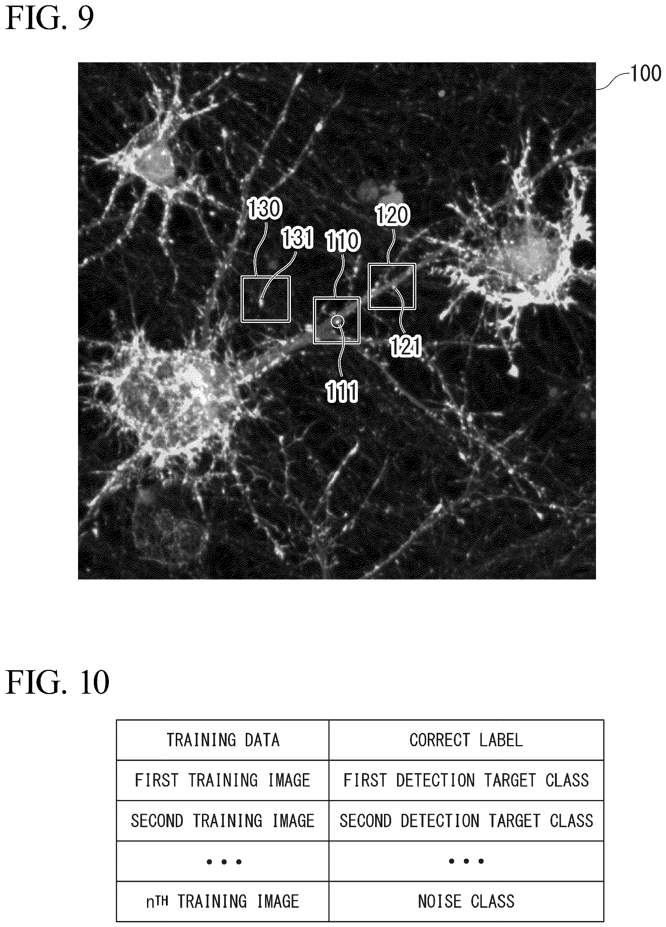

FIG. 9 is a diagram showing an example of a captured image 100 for training in the third embodiment. Each training image in the training data is a partial image (each small region, each small image) defined in the captured image 100 for training. The shape and size of the training image are the same as those of the candidate for the detection target image cut out from the captured image for detection by the candidate generator 560 of the detection device 5b. The training image 110 includes a detection target image 111 (a drebrin image) at a synapse of a nerve cell. The training image 120 includes a detection target image 121 (a drebrin image) at a synapse of a nerve cell. The training images 130 include a noise image 131 at a location where there is no synapse of a nerve cell.

In the captured image 100 illustrated in FIG. 9, from the viewpoint of ensuring the ease of viewing, only the training images 110, 120, and 130, each of which is a representative of the training images, are designated by reference signs. More training images may be defined for the captured image 100.

The user operates the operator 41 while viewing the captured image 100 for training displayed on the display 46. The user operates the operator 41 to define a correct label for each training image. Here, the drebrin that is an example of the detection target is accumulated in the synapses of nerve cells. Thus, for example, a particulate image located near an axon image and a dendrite image having a synapse image is likely to be a drebrin image.

For example, since the training image 110 includes a synapse image, the user associates the correct label "drebrin class" (the detection target class) with the training image 110. In addition, since the training image 120 includes a synapse image, the user associates the correct label "drebrin class" with the training image 120.

For example, the training image 130 does not include a synapse image, and the noise image 131 is an amorphous image (a non-particulate image). In addition, the contrast component of the contour of the noise image 131 is not high. From these, the user associates the correct label "noise class" or "background class" with the training image 130.

FIG. 10 is a diagram showing an example of the training data in the third embodiment. The training data includes combinations of the training images and the correct labels "detection target classes." The training data may include combinations of the training images and the correct labels "noise classes." Here, the correct labels may be defined as two classes of the detection target classes and the noise classes (the background classes), or may be defined as a class for each size of the particulate shape (the convex portion) and a noise class.

Next, an example of an operation of the detection system 1b will be described.

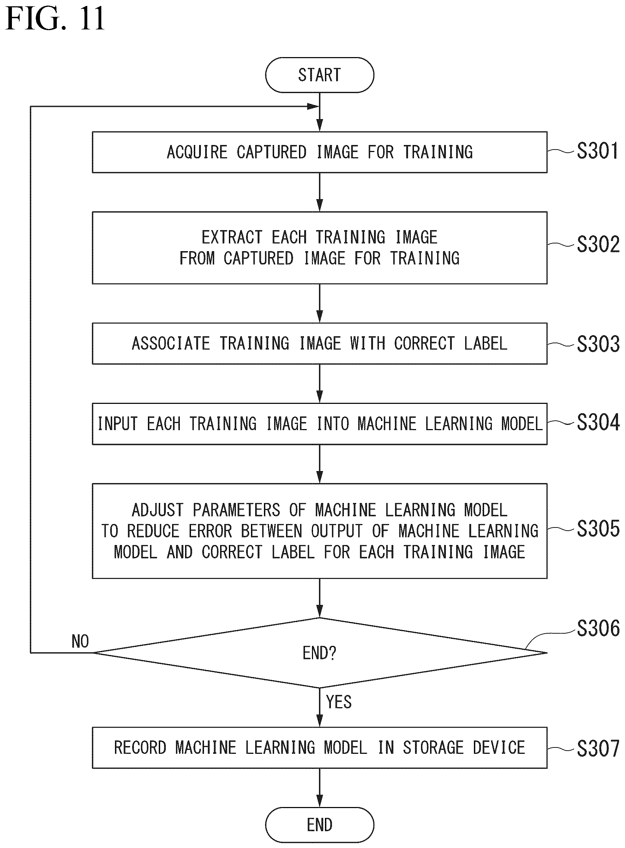

FIG. 11 is a flowchart showing an example of an operation of the training device 4 in the training stage in the third embodiment. The training image generator 450 of the training device 4 acquires the captured image 100 for training from the image transmitting device 3 (step S301). The training image generator 450 generates the training images from the captured image 100. The pre-processor 451 extracts the training image 110, the training image 120, and the like from the training images generated by the training image generator 450 based on the fact that the training image 110 and the training image 120 are within a predetermined distance from the structure (the synapse) around the detection target (the drebrin). The pre-processor 451 may extract the training image 130 and the like from the captured image 100 for training based on the fact that the training image 130 is separated from the structure around the detection target by a predetermined distance or more (step S302).

The pre-processor 451 associates the training images extracted in step S302 with the correct labels based on the operation received by the operator 41. For example, the pre-processor 451 associates the training image 110, which includes the synapse image and the detection target image 111 (the drebrin image), with the correct label "drebrin class." For example, the pre-processor 451 associates the training image 130 that does not include the synapse image with the correct label "noise class" (step S303).

The trainer 452 inputs each training image into the machine learning model (step S304). The trainer 452 adjusts the parameters of the machine learning model to reduce an error between the output (the class) of the machine learning model and the correct label for each training image (step S305). The trainer 452 determines whether or not to end the training processing based on, for example, the operation received by the operator 41 (step S306). In a case in which the training processing is to be continued (step S306: NO), the trainer 452 returns the processing to step S301. In a case in which the training processing is to be ended (step S306: YES), the trainer 452 records the machine learning model (the trained model) in the storage device 43 (step S307).

In the inference stage (the inference phase), the detection device 5b of the detection system 1b performs the pre-processing, the detection processing, and the post-processing similar to those performed by the detection device 5 of the first embodiment. However, in the processing of step S101 in the flowchart of the first embodiment shown in FIG. 5, the detector 564 of the detection device 5b acquires the machine learning model (the trained model) from the training device 4.

In addition, the pre-processor 451 of the training device 4 may further perform the second pre-processing in the first embodiment on the captured image 100 for training. The training executor 45 performs the subsequent processing from step S303 on the image, excluding the training images obtained from a region corresponding to the exclusion region obtained by the second pre-processing in the captured image 100 for training from among the training images extracted in step S302.

In the training stage, the above-described detection system generates the training images including the image of the detection target from the captured image for training that includes the image of the detection target object and the noise image, and trains the machine learning model. The detection system may perform training using training images extracted from among the training images generated from the captured image for training based on the structure around the detection target or the degree of the inhibition factor to the detection target. In the inference stage, the detection system performs the first pre-processing and the second pre-processing to extract the candidates for the detection target image from the captured image for detection, which includes the image of the detection target object and the noise image, based on the structure around the detection target and the degree of the inhibition factor to the detection target. The detection system applies the machine learning model to the extracted candidates for the detection target image, and detects the image of the detection target from among the candidates. In the inference stage, if the detection system does not perform the second pre-processing in which the candidates for the detection target image are narrowed down based on the degree of the inhibition factor to the detection target, the visibility of the minute shape may be reduced in a region with a high density of subjects other than the detection target, such as cells and tissues, and thus detection may be inhibited and detection performance may be unstable. In the detection system of the above-described embodiment, in addition to the first pre-processing, the second pre-processing is performed to extract the region with a high density of subjects other than the detection target, such as cells or tissues that inhibit detection of the minute detection target, and to exclude the extracted region from the a region in which the minute detection target is detected. Therefore, it is possible to stabilize the performance of detecting the image of the minute detection target in the captured image.

The present invention includes the following aspects.
[1] A detection system including: a candidate generator that generates candidates for a detection target image, in which a detection target is captured, from a captured image for detection that includes an image of an object having the detection target and a noise image; a pre-processor that divides the captured image for detection into small regions and determines whether or not each small region image has features of subjects other than the object having the detection target based on an image feature amount of the small region image to obtain an exclusion region in the captured image based on a determination result; and a detector that detects the detection target image from among the candidates for the detection target image that are not included in the exclusion region by predetermined detection processing.
[2] The detection system according to [1], wherein the pre-processor sets the small region, in which the small region image in which a structure similar to the detection target appears or the small region image in which a structure of the detection target is difficult to be recognized is obtained, as the exclusion region.
[3] The detection system according to [1], wherein the pre-processor performs the determination using a machine learning model trained using an image of a region not suitable for detection in the detection target image.
[4] The detection system according to [3], the detection system further including: a trainer that trains the machine learning model based on a small region image acquired from a captured image for training that includes an image of an object having a detection target and a noise image, and label information indicating whether or not the small region image includes subjects other than the object having the detection target.
[5] The detection system according to any one of [1] to [4], wherein the detector detects the detection target image from among the candidates for the detection target image generated by the candidate generator by the predetermined detection processing, and excludes the detection target image included in the exclusion region from among the detected detection target images.
[6] The detection system according to [1], the detection system further including: a trainer that trains a machine learning model based on candidates for a detection target image obtained from a captured images for training that includes an image of an object having a detection target and a noise image, and label information indicating whether or not each of the candidates is the detection target image, wherein the detector detects the detection target image from among the candidates for the detection target image that are not included in the exclusion region in the captured image for detection, using the machine learning model.
[7] The detection system according to any one of [1] to [6], wherein the pre-processor extracts a target to be subjected to the predetermined detection processing from among the candidates for the detection target image based on an image feature amount of a structure around the detection target in the captured image for detection.
[8] The detection system according to [7], wherein the pre-processor extracts a target to be subjected to the predetermined detection processing from among the candidates for the detection target image based on a linear image according to a structure around the detection target in the captured image for detection.
[9] A detection device including: a candidate generator that generates candidates for a detection target image, in which a detection target is captured, from a captured image for detection that includes an image of an object having the detection target and a noise image; a pre-processor that divides the captured image for detection into small regions and determines whether or not each small region image has features of subjects other than the object having the detection target based on an image feature amount of the small region image to obtain an exclusion region in the captured image based on a determination result; and a detector that detects the detection target image from among the candidates for the detection target image that are not included in the exclusion region by predetermined detection processing.
[10] A detection method including: generating candidates for a detection target image, in which a detection target is captured, from a captured image for detection that includes an image of an object having the detection target and a noise image; dividing the captured image for detection into small regions and determining whether or not each small region image has features of subjects other than the object having the detection target based on an image feature amount of the small region image to acquire an exclusion region in the captured image based on a determination result; and detecting the detection target image from among the candidates for the detection target image that are not included in the exclusion region by predetermined detection processing.
[11] A program that causes a computer to function as a detection device according to [9].

In the above, the embodiments of this invention have been described in detail with reference to the drawings, but the specific configuration is not limited to the embodiments, and a design and the like within a range not departing from the gist of this invention are also included.

### [Patent Documents]

[Patent Document 1] Japanese Patent No. 6629762
[Patent Document 2] Published Japanese Translation No. 2021-517255 of the PCT International Publication

## Claims

1. A detection system comprising:
a candidate generator that generates candidates for a detection target image, in which a detection target is captured, from a captured image for detection that includes an image of an object having the detection target and a noise image;
a pre-processor that divides the captured image for detection into small regions and determines whether or not each small region image has features of subjects other than the object having the detection target based on an image feature amount of the small region image to obtain an exclusion region in the captured image based on a determination result; and
a detector that detects the detection target image from among the candidates for the detection target image that are not included in the exclusion region by predetermined detection processing.

2. The detection system according to claim 1,
wherein the pre-processor sets the small region, in which the small region image in which a structure similar to the detection target appears or the small region image in which a structure of the detection target is difficult to be recognized is obtained, as the exclusion region.

3. The detection system according to claim 1,
wherein the pre-processor performs the determination using a machine learning model trained using an image of a region not suitable for detection in the detection target image.

4. The detection system according to claim 3, the detection system further comprising:
a trainer that trains the machine learning model based on a small region image acquired from a captured image for training that includes an image of an object having a detection target and a noise image, and label information indicating whether or not the small region image includes subjects other than the object having the detection target.

5. The detection system according to claim 1,
wherein the detector detects the detection target image from among the candidates for the detection target image generated by the candidate generator by the predetermined detection processing, and excludes the detection target image included in the exclusion region from among the detected detection target images.

6. The detection system according to claim 1, the detection system further comprising:
a trainer that trains a machine learning model based on candidates for a detection target image obtained from a captured images for training that includes an image of an object having a detection target and a noise image, and label information indicating whether or not each of the candidates is the detection target image,
wherein the detector detects the detection target image from among the candidates for the detection target image that are not included in the exclusion region in the captured image for detection, using the machine learning model.

7. The detection system according to claim 1,
wherein the pre-processor extracts a target to be subjected to the predetermined detection processing from among the candidates for the detection target image based on an image feature amount of a structure around the detection target in the captured image for detection.

8. The detection system according to claim 7,
wherein the pre-processor extracts a target to be subjected to the predetermined detection processing from among the candidates for the detection target image based on a linear image according to a structure around the detection target in the captured image for detection.

9. A detection device comprising:
a candidate generator that generates candidates for a detection target image, in which a detection target is captured, from a captured image for detection that includes an image of an object having the detection target and a noise image;
a pre-processor that divides the captured image for detection into small regions and determines whether or not each small region image has features of subjects other than the object having the detection target based on an image feature amount of the small region image to obtain an exclusion region in the captured image based on a determination result; and
a detector that detects the detection target image from among the candidates for the detection target image that are not included in the exclusion region by predetermined detection processing.

10. A detection method comprising:
generating candidates for a detection target image, in which a detection target is captured, from a captured image for detection that includes an image of an object having the detection target and a noise image;
dividing the captured image for detection into small regions and determining whether or not each small region image has features of subjects other than the object having the detection target based on an image feature amount of the small region image to acquire an exclusion region in the captured image based on a determination result; and
detecting the detection target image from among the candidates for the detection target image that are not included in the exclusion region by predetermined detection processing.

11. A non-transitory recording medium in which a program for causing a computer to function as a detection device is recorded, the detection device comprising:
a candidate generator that generates candidates for a detection target image, in which a detection target is captured, from a captured image for detection that includes an image of an object having the detection target and a noise image;
a pre-processor that divides the captured image for detection into small regions and determines whether or not each small region image has features of subjects other than the object having the detection target based on an image feature amount of the small region image to obtain an exclusion region in the captured image based on a determination result; and
a detector that detects the detection target image from among the candidates for the detection target image that are not included in the exclusion region by predetermined detection processing.
